# EUROPÄISCHE PATENTANMELDUNG

(11) **EP 3 012 056 A1**
(43) Veröffentlichungstag der Anmeldung: **27.04.2016**
(21) Anmeldenummer: 15182503.1
(22) Anmeldetag: 26.08.2015
(51) Int. Cl.: B23F 23/12, B23F 17/00, B23F 19/10

(54) **VERFAHREN UND VORRICHTUNG ZUM ANFASEN UND ENTGRATEN VERZAHNTER WERKSTÜCKE**

(30) Priorität: 30.09.2014 DE 102014014132
(71) Anmelder: Liebherr-Verzahntechnik GmbH, 87437 Kempten (DE)
(72) Erfinder: Zeller, Thomas, 87437 Kempten (DE)
(74) Vertreter: Laufhütte, Dieter

(57) **Zusammenfassung**

Die Erfindung betrifft ein Verfahren und eine Vorrichtung zum Anfasen und Entgraten verzahnter, vorzugsweise großvolumiger, Werkstücke mit einer Entgratvorrichtung die auf oder an dem Bearbeitungskopf einer Verzahnmaschine angeordnet ist und die zumindest teilweise die Maschinenachsen der Verzahnmaschine nutzt, um eine Verzahnung entlang einer Zahnkontur anzufasen und zu entgraten.

## Beschreibung

Die Erfindung betrifft ein Verfahren und eine Vorrichtung zum Anfasen und Entgraten verzahnter, vorzugsweise großvolumiger Werkstücke mit einer Anfas- und Entgratvorrichtung, die auf oder an dem Bearbeitungskopf einer Verzahnmaschine angeordnet ist und die zumindest teilweise die Maschinenachsen der Verzahnmaschine nutzt, um eine Verzahnung entlang einer Zahnkontur anzufasen und zu entgraten.

Bei der spanenden Bearbeitung von metallischen Werkstücken kommt es insbesondere an der Werkzeugaustrittsseite zur Bildung von Graten. Diese groben Grate müssen vor der Weiterbehandlung der Werkstücke entfernt werden, damit es nicht zu Störungen in den Folgeprozessen oder zur Verletzung der Maschinenbediener kommen kann. Zusätzlich werden vor einem Wärmebehandlungsprozess häufig die Stirnkante von Verzahnungen mit einer Schutzfase versehen, die die Zahnkanten des Werkstücks vor Beschädigungen und Aufwürfen schützen soll und vor allem um das Hartfeinbearbeitungswerkzeug im Folgeprozess vor stark aufgekohlten harten Kanten und Graten zu schützen. Der Begriff Entgraten wird dabei häufig synonym für Entgraten und Anfasen verwendet. Wobei man unter Entgraten das Entfernen des groben Grates, der nach einem Zerspanungsprozess am Werkstück anhaftet, versteht und unter Anfasen das gezielte Anbringen einer Schutzfase, wobei je nach Verfahren dabei auch gleichzeitig der Grobgrat mit entfernt werden kann.

Bei der Großserienfertigung von verzahnten Werkstücken mit Durchmessern kleiner ca. 500 mm gehört ein Anfasen und Entgraten von verzahnten Werkstücken in einer Verzahnmaschine inzwischen zum Stand der Technik. Die gängigsten Verfahren hierzu sind Drück-/Wälzentgraten (DE 25 34 574 A1), Fräsen einer Fase mit speziellen Fräsern ("ChamferCut" / DE 20 2005 014 619 A1) oder auch Bearbeiten der Fasen mit Frässtiften, die mittels einer definierten Vorspannkraft auf die Stirnkanten der Verzahnung unter einem bestimmten Winkel angepresst werden und so auf der Fasenkontur "abrollen" ("Gratomat" / DE 1 969 872 A1). Für kleinere verzahnte Werkstücke (<ø 500 mm) wie sie vor allem in Kleingetrieben und/oder Automobil- und NFZ-Getrieben verbaut werden, sind diese Anfas- und Entgratverfahren seit längerem erfolgreich im Einsatz. Bei Großserien ist die Anschaffung speziell angepasster Anfas- und Entgratwerkzeuge sehr wirtschaftlich, da der damit durchgeführte Prozess sehr wenig Bearbeitungszeit in Anspruch nimmt. Überwiegend findet die Anfas- und Entgratbearbeitung bei solchen Maschinen hauptzeitparallel zur Verzahnbearbeitung statt. Leider sind diese Werkzeuge dann auch speziell auf eine bestimmt Verzahnung abgestimmt bzw. können evtl. manchmal noch bei sehr ähnlichen Verzahnungen (beispielsweise andere Zahnradbreiten) eingesetzt werden.

Bei Großverzahnungen (Werkstückdurchmesser >1000 mm bis >16.000 mm), großen Moduln und tonnenschweren Werkstücken werden die verzahnten Werkstücke heute häufig noch mit handgeführten Entgratwerkzeugen, beispielsweise Einhandschleifgeräten, bearbeitet. Je größer der Werkstückdurchmesser und je größer der Modul ist, umso wahrscheinlicher ist eine manuelle Entgratbearbeitung, insbesondere wenn es sich um kleine Werkstück-Losgrößen handelt, für die die Beschaffung eines speziell angepassten Entgratwerkzeuges, wie z.B. eines ChamferCut-Fräsers, unwirtschaftlich ist.

Bei neuerer Prozessauslegung geht der Trend weg vom Anfasen mit handgeführten Entgratwerkzeugen. Dafür gibt es verschiedene Gründe.
- Die Anforderungen an die Verzahnungsqualität steigt bei manchen Verzahnungen deutlich an. So wird bei hochbelasteten Verzahnungen, beispielsweise für Windenergiegetriebe, immer mehr auch Reproduzierbarkeit für Fasengröße und Fasenwinkel an allen Zähnen und Werkstücken sowie auf die Fasenqualität geachtet.
- Der Schwerpunkt bei der Bearbeitung dieser Werkstücke liegt nicht mehr nur auf der reinen Bearbeitungszeit, sondern es ist wichtiger ein möglichst fertig bearbeitetes Werkstück von der Maschine zu erhalten.
- Aus Gründen der Arbeitssicherheit sind die mit hoher Geräusch- und Staubemission belasteten Handarbeitsplätze in einer modernen Fertigungshalle nicht mehr gewünscht.
- Rohlinge und erst recht verzahnte Werkstücke bei Großverzahnungen sind teilweise teuer bis sehr teuer. Sollte ein Zahnrad beim Handling nachhaltig geschädigt werden gibt es teils sehr lange Wiederbeschaffungszeiten bis wieder ein verzahnbarer Rohling vorliegt. Von daher wird auch hier versucht durch die Integration von zusätzlichen Prozessen in die Verzahnmaschine ein möglichst fertiges Werkstück von der Maschine zu nehmen.
- Es gibt Werkstücke, bei denen die Stirnseiten der Verzahnungen nicht eben sind sondern Schrägen, Radien oder Absätze aufweisen. In diesem Fall wird, insbesondere bei Schrägverzahnung, die Anbringung einer gleichmäßigen Fase mit handgeführten Entgratwerkzeugen sehr schwierig.

Diese Gründe sprechen auch bei Großverzahnungen für eine automatisierte Erzeugung der Fasen an den Stirnkanten der Verzahnungen. Dabei muss das Verfahren eine kostengünstige Lösung bieten und auf Grund der geringen Werkstück-Losgrößen müssen möglichst unterschiedliche Verzahnungen bearbeitbar sein. Außerdem soll die Gefahr, dass das Werkstück beim Transport oder beim Anfasen beschädigt wird, minimiert werden.

Daher scheiden separate Entgratmaschinen, die heute auch für Großverzahnungen (< 3500 mm Durchmesser) verfügbar sind, aus. Diese Entgratmaschinen arbeiten häufig mit einem System bei dem der Fräser auf der Zahnkante aufliegt und so der Zahnkante folgt (System Gratomat). Nachteilig an diesem System ist es, dass der Fasenwinkel und die Fasengröße über der Zahnhöhe stark unterschiedlich ist.

Ein weiteres System arbeitet mit einem Frässtift, der über eine Hilfseinrichtung geführt der Zahnkontur nachfolgt. Die eigenständige Entgratmaschine nach der DE 11 2008 003 992 T5 zeigt dabei zwei Ausführungsformen sowohl zum Anfasen und Entgraten von innen- und auch außenverzahnte Werkstücken. Die Werkstücke werden dabei zwischen zwei Werkstückhalterollen und einer Werkstückantriebshalterolle vor dem Werkzeug entlang geführt. Das Werkzeug folgt dabei der Verzahnkontur über ein Werkstückabtastglied. Mit dieser Art von Entgrateinrichtung ist aber nur das Anfasen von Verzahnungen mit ebenen Stirnflächen von geradverzahnten Werkstücken möglich. Sind Schrägen oder aber Knicke in diesem Bereich vorhanden, müsste das Werkzeug in seiner Zustellung vertikal der Zahnkontur nachgeführt werden, was bei diesen Einheiten bisher so nicht vorgesehen ist. Nachteilig an diesen Entgratmaschinen ist es, dass es sich dabei um eigenständige Maschinen mit eigener Steuerung, Maschinentisch für das Werkstück, Sicherheitseinhausung etc. handelt, wodurch dementsprechende Kosten verursacht werden. Zusätzlich benötigen diese Maschinen eine separate Aufstellfläche, was sich insbesondere bei Großverzahnungen deutlich bemerkbar macht. Außerdem muss das Werkstück erst von der Verzahnmaschine zur Entgratmaschine transportiert werden und dort wieder aufgespannt werden, was wiederum ein erhöhtes Handlingrisiko beinhaltet.

Die DE 20 2012 008 601 U1 zeigt eine Werkzeugmaschine mit integrierter Anfas- und/oder Entgrateinrichtung. In einem Gegenhalterständer ist dabei im Sockelbereich eine Entgrateinrichtung mit numerisch gesteuerten Achsen höhenverstell- und zustellbar integriert. Nachteilig daran ist das diese Einheit einen zusätzlichen Gegenständer benötigt und zusätzlich mindestens drei weitere NC-Achsen in die Maschine integriert werden müssen.

Die DE 10 2009 019 433 A1 offenbart ein System mit einer separaten ChamferCut Entgrateinrichtung für eine Verzahnmaschine die seitlich neben dem Werkstücktisch an einem Ständer montiert ist. Mit diesem Chamfercut Fräser soll idealerweise eine der beiden Stirnseiten der Verzahnung während des Wälzfräsens angefast werden. Nachteilig an diesem Verfahren ist die Werkstückabhängigkeit des ChamferCut Fräsers, der gezielt auf eine bestimmt Verzahnung ausgelegt wird und damit vorzugsweise nur bei größeren Serien wirtschaftlich eingesetzt werden kann.

Aufgabe der vorliegenden Erfindung ist es nun ein Entgratverfahren und eine kostengünstige Anfas- und Entgratvorrichtung zu schaffen, mit der ein Anfasen und Entgraten, vorzugweise von Großverzahnungen, auf einer Verzahnmaschine stattfinden kann. Das Werkstück soll anschließend fertig angefast und entgraten von der Maschine abgespannt werden können.

Erfindungsgemäß wird diese Aufgabe durch eine Vorrichtung mit den Merkmalen des Anspruchs 1 gelöst.

Weiterbildungen der Erfindung sind in den Unteransprüchen zu entnehmen.

Die erfindungsgemäße Vorrichtung ist auf oder am Bearbeitungskopf einer Verzahnmaschine montiert. Dies bietet den Vorteil, dass die Maschinenachsen, die zunächst zur Verzahnungserzeugung an einem Werkstück genutzt werden, auch für die Anfasbearbeitung zumindest teilweise genutzt oder sogar vollständig genutzt werden können.

So wird zur Durchführung des erfindungsgemäßen Verfahren die Anfas- und Entgratvorrichtung nach Abschluss der Verzahnungsbearbeitung aus ihrer Ruheposition in ihre Arbeitsposition gefahren oder geschwenkt und anschließend wird die Anfasbearbeitung begonnen. Die Ruheposition der Entgratvorrichtung befindet sich dabei vorzugsweise auf dem Bearbeitungskopf oberhalb der Werkzeugaufnahme für den Wälz- oder Profilfräser zur Verzahnungserzeugung. Dort stört sie am wenigsten bei den Verfahrbewegungen des Fräskopfes zur Zahnradbearbeitung und die Gefahr von Kollisionen mit dem Werkstück oder der Vorrichtung zur Werkstückaufspannung ist bei der Verzahnungserzeugung am geringsten. Andererseits ist sie dort sehr nahe an der Bearbeitungsstelle zur Verzahnungsbearbeitung angebracht und ist somit durch einfache Verfahrbewegungen leicht in den Eingriff mit der Verzahnung zu bringen. Die Zustellung des Entgratfräsers zum verzahnten Werkstück erfolgt dabei in einer Ebene, die sich parallel zur X-Achse/Z-Achse und zur Mittelachse des Maschinentisches erstreckt. In der Arbeitsstellung befindet sich die Entgratspindel zwischen Verzahnwerkzeug und Werkstück, zumindest aber vor dem Verzahnwerkzeug. Damit kann die Entgratvorrichtung eingesetzt werden, ohne dass das Verzahnwerkzeug erst aus der Maschine ausgebaut werden muss. Dies bedeutet auch, das der Verzahnherstellungs- und Anfasprozess automatisch gesteuert nacheinander erfolgen kann und ein fertig bearbeitetes Werkstück aus der Maschine kommt. Weiter wäre es möglich zwischen mehreren Frässchritten eine Anfas- und Entgratbearbeitung durchzuführen. Dies wäre bei einem notwendigen Ausbau des Verzahnungsfräswerkzeuges nicht möglich.

Das Anfaswerkzeug, beispielsweise ein kegeliger oder zylindrischer Frässtift, wird dabei über Achsbewegungen des Bearbeitungskopfes mit seiner Anfas- und Entgratvorrichtung entlang der Zahnkante einer Verzahnung geführt, während sich das Werkstück mit einer vorgegebenen Geschwindigkeit um seine Mittelachse dreht. In einem ersten Schritt wird zunächst die Fase an einer Stirnseite, beispielsweise der Oberseite, einer Verzahnung gefräst. Im Anschluss daran wird das Werkzeug auf die gegenüberliegende Stirnseite der Verzahnung zugestellt und in einem zweiten Schritt auch diese Stirnseite mit einer Anfasung versehen. Über die Schwenkeinrichtung für die Anfasspindel kann deren Einschwenkwinkel beispielsweise gesteuert über der Zahnhöhe und in Abhängigkeit von der Flanke geändert werden. So kann auf der rechten und linken Flanke und bedarfsweise auch am Zahnfuß und Zahnkopf eine unterschiedliche Fase erzeugt werden.

Parameter wie beispielsweise Fasengröße, Fasenwinkel, Fasenverlauf können programmtechnisch in einem Bearbeitungsprogramm in der Maschinensteuerung hinterlegt und durch die NC-Achsen eingestellt werden. Über die Vorschubwerte oder die Anzahl der Schnitte kann dann beispielsweise auch die Fasengröße beeinflusst werden. Durch das NC-Programm gesteuert können diese Fasenparameter an einer Vielzahl an Werkstücken reproduzierbar erzeugt werden.

In einer alternativen Ausführungsform ist die Anfas- und Entgratvorrichtung noch zusätzlich auf einer weiteren Zustellachse montiert, die sich in Radial-Richtung auf das Werkstück zu erstreckt. Durch die geringere zu bewegende Masse, nämlich nur noch die Anfas- und Entgratvorrichtung an der Stelle des den komplette Maschinenständers, ist eine dynamischere Bewegung in X-Richtung (Zustellrichtung der Zahnhöhe) ermöglicht. Damit können insgesamt höhere Achsgeschwindigkeiten bei allen genutzten Achsen gefahren werden. Dies ist besonders bei der Anfasbearbeitung im Bereich der Zahnflanken von Vorteil, da hier die größten Änderungen der radialen Zustellung je Winkelgrad am Werkstück erforderlich sind. Im Bereich von Zahnkopf und Zahnfuß hingegen sind nur geringe radiale Zustellungen je Winkelgrad am Werkstück erforderlich.

Weiterhin wäre es durch eine zusätzliche NC-Achse an der Entgratvorrichtung möglich, Bewegungen parallel zur X-Z-Ebene entlang der Stirnseite der Verzahnung mit höherer Geschwindigkeit zu fahren, da sich die bewegte Masse nur noch aus Teilen der Entgratvorrichtung sowie dem Antrieb für das Entgratwerkzeug zusammensetzt, so dass nicht mehr der gesamte Fräskopf in Vertikal-Richtung (Z-Achse) bewegt werden muss. Durch diese verschiedenen möglichen Ausführungsformen lässt sich die Entgratvorrichtung je nach den geforderten Leistungsdaten unterschiedlich konfigurieren.

In einer weiteren Ausführungsform kann in der Maschine oder am Bearbeitungskopf der Maschine ein Mess-System angeordnet sein, mit dem Messaufgaben an der Verzahnung durchgeführt werden können. Dies kann dazu dienen, die verzahnte Qualität zu bestimmen und zu dokumentieren, aber auch um die Verzahnung positioniert zu einem bestimmten Punkt zu erzeugen. Diese Messeinrichtung kann erfindungsgemäß nun auch dazu genutzt werden, die Lage der Verzahnung und die Zahnform am Werkstück zu bestimmen und ggf. auch den Verlauf der Stirnseite im Bereich der Verzahnung zu ermitteln. Damit muss diese Zahnkontur nicht aufwändig programmiert werden, sondern kann durch eine einfache Vermessung, z.B. einer einzelnen Zahnlücke und der Stirnseite im Bereich der Verzahnung, von der Maschinensteuerung berechnet werden. Dabei reicht es aus, wenn nur ein Zahn oder eine Zahnlücke vermessen wurde. Denn die restliche Verzahnkontur kann mit Verzahndaten, wie z.B. der Zähnezahl, der Zahnbreite, dem Schrägungswinkel der Verzahnung und andere Verzahndaten, berechnet werden. Diese sind bereits von der Verzahnungserzeugung bekannt und können in die Berechnung mit einfließen. Daraus kann die Steuerung dann ein Programm für die Anfasbearbeitung der gesamten Verzahnung erstellen. Dieses Verfahren kann bei evolventischen und nicht-evolventischen Verzahnungen angewendet werden. Denn besonders bei nicht-evolventischen Verzahnungen ist die Bestimmung des Flankenverlaufs nicht trivial.

Ebenso wäre es möglich, nur Teilbereich eines einzelnen Zahnes oder einer Zahnlücke, wie z.B. den Zahnfuß und Zahnkopfbereich, mit der Messeinrichtung abzutasten, da der Verlauf der Zahnflanke, besonders bei evolventischen Verzahnungen bereits von der Verzahnungsbearbeitung bekannt ist. So kommt man sehr einfach und schnell zu einem Anfasprogramm ohne dass ein großer Programmieraufwand notwendig wäre.

Eine weitere Möglichkeit für die Programmierung der Fasenform besteht in einer, vorzugsweise benutzergeführten, "Teach-In"-Methode. Durch manuelles Anfahren von vorgegebenen Punkten mit einem am Bearbeitungskopf angebrachten Taster können vorgegebene Referenzpunkte an einer Zahnlücke bestimmt werden. Daraus kann die Maschinensteuerung dann anschließend zusammen mit den der Steuerung bekannten Verzahndaten das Bearbeitungsprogramm auch für die restlichen Lücken erstellen. Wichtig sind dabei vor allem mehrere Referenzpunkte im Bereich des Zahnkopf- und Zahnfußradius. Die Lage der Evolvente entlang der Zahnflanke ist durch den vorhergehenden Verzahnprozess weitestgehend bekannt.

In einer weiteren alternativen Ausführungsform kann die Anfas- und Entgratvorrichtung auch für weitere Bearbeitungsoperationen am Werkstück, wie z.B. Fräs-, Bohr- oder Schleifoperationen, genutzt werden. Über einen ggf. automatisieren Werkzeug- oder Bearbeitungskopfwechsel an der Anfas- und Entgratvorrichtung können auch verschiedene Bearbeitungsoperationen nacheinander ausgeführt werden.

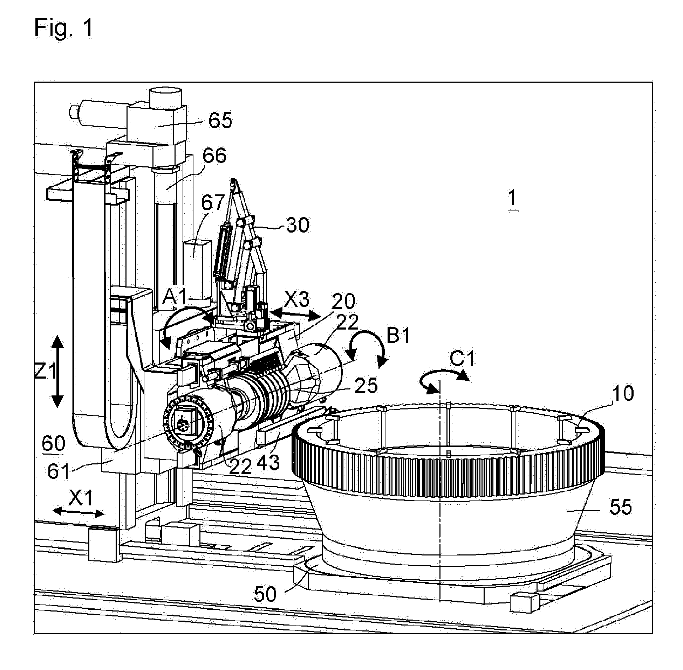

Weitere Merkmale, Einzelheiten und Vorteile der Erfindung werden anhand von in der Zeichnung dargestellten Ausführungsbeispiele näher erläutert. Es zeigen:
- **Fig**. 1: eine Verzahnmaschine mit der erfindungsgemäßen Anfas- und Entgratvorrichtung;
- **Fig**. 2: eine Ansicht der Anfas- und Entgratvorrichtung aus Fig. 1;
- **Fig**. 3a-c: eine schematische Darstellung der Bewegung der Anfas- und Entgratvorrichtung von ihrer Parkposition in die Arbeitsposition;
- **Fig**. 3d-e: eine schematische Darstellung der Arbeitsbewegungen der Anfasspindel;
- **Fig**. 3f: eine Detailansicht der Anfas- und Entgratvorrichtung bei der Bearbeitung der Unterseite eines verzahnten Werkstücks;
- **Fig**. 4: eine Detailansicht der Anfas- und Entgratvorrichtung aus Fig. 1 mit dem Entgratwerkzeug im Bearbeitungseingriff; und
- **Fig**. 5a-e: eine schematische Darstellung verschiedener verzahnter Werkstücke mit unterschiedlichen Stirnseiten im Bereich der Verzahnung.

**Fig**. 1 zeigt eine Seitenansicht der erfindungsgemäßen Anfas- und Entgratvorrichtung 30 eingebaut in eine Verzahnmaschine 1 nach dem Stand der Technik. Auf einem Maschinentisch 50 ist über eine Werkstückaufspannung 55 ein Werkstück 10 aufgespannt. Ein Bearbeitungskopf 20 zur Aufnahme eines Werkzeuges 25, beispielsweise eines Wälzfräsers, ist vertikal verfahrbar an einem Maschinenständer 60 montiert. Über die Zustellachse-X1 wird der Maschinenständer mit dem Bearbeitungskopf zur Herstellung einer Verzahnung in Richtung auf das Werkstück 10 zugestellt. Je nach Bearbeitungsverfahren wird der Frässchlitten 61 mit dem Bearbeitungskopf 20 zur Verzahnungserzeugung von unten nach oben mit der Z1-Achse bewegt und so mit dem Wälzfräser 25, der durch die Motoren 22 um die B1-Achse angetrieben wird, die Verzahnung erzeugt. Die Erzeugung der Verzahnung erfolgt dabei wälzgekoppelt, d.h. die Fräserdrehung (B1) und Fräserbewegung in Z1 Richtung erfolgt in Abhängigkeit von der Drehposition des Werkstücks 10 bzw. des Maschinentisches 50 um die C1-Achse.

Bewegt wird der Frässchlitten über den Antriebsmotor 65 und die Kugelrollspindel 66. Über die A1-Achse mit dem Achsmotor 67 wird der Schwenkwinkel des Bearbeitungskopfs auf den Werkzeugsteigungswinkel und den Schrägungswinkel der Verzahnung eingestellt. Diese Achsen dienen auch gleichzeitig als Einstellachsen für die Anfas- und Entgratvorrichtung 30. Zusätzlich ist bei dieser Ausführung die Anfas- und Entgratvorrichtung noch auf einer separaten Zustellachse 32, X3-Achse, montiert. Durch diese Ausführung muss nicht das gesamte Ständergewicht in X1-Richtung bewegt werden, um das Entgratwerkzeug bzw. die Anfas- und Entgratvorrichtung radial in Richtung auf das Werkstück zu bewegen.

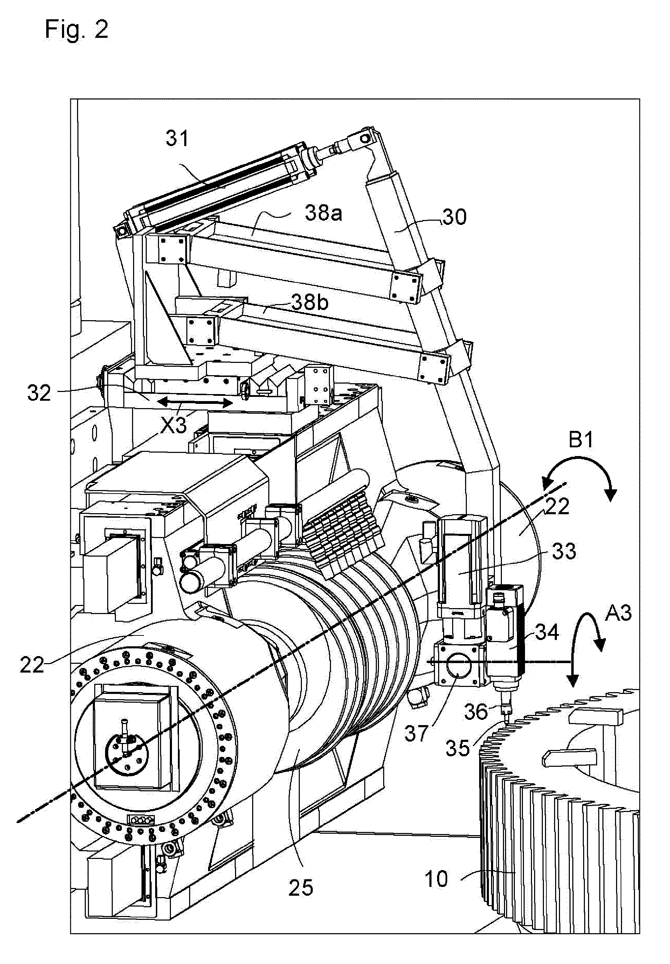

In der Detailansicht **Fig. 2** ist eine beispielhafte Anfas- und Entgratvorrichtung 30 in ihre Bearbeitungsposition geschwenkt dargestellt. Geschwenkt wird die Anfas- und Entgratvorrichtung über eine Mehrgelenkanordnung durch den Aktor 31, in diesem Fall einen Pneumatikzylinder, der die Anfas- und Entgratvorrichtung aus ihrer Parkposition oben auf dem Bearbeitungskopf 20 in die Arbeitsposition schwenkt. Alternativ könnte dieser Aktor auch eine NC-Achse sein. Damit wäre es möglich auch Zwischenpositionen anzufahren und damit mit der Anfasspindel Bearbeitungspositionen und -bewegungen in Vertikalrichtung NC-gesteuert auszuführen. Der in der Anfasspindel 34 und der Werkzeugaufnahmen 36 eingespannte Anfasfräser 35 bearbeitet die Zahnkante des Werkstücks 10. Gezeigt wird die Bearbeitung der oberen Stirnseite einer Verzahnung. Zur Bearbeitung der unteren Stirnseite der Verzahnung kann die Anfasspindel 34 um die A3-Achse über das Schwenkgetriebe 37 mit dem Antriebsmotor 33 geschwenkt werden. Über diese Achse kann auch der Anfasfräser 35 in seiner Neigung gegenüber der Zahnkante verschwenkt werden, wodurch dann eine Einstellung des Fasenwinkels der Anfasung erfolgen kann. Die Bewegung der Anfas- und Entgratvorrichtung 30 erfolgt dabei in Abhängigkeit von der Tischposition.

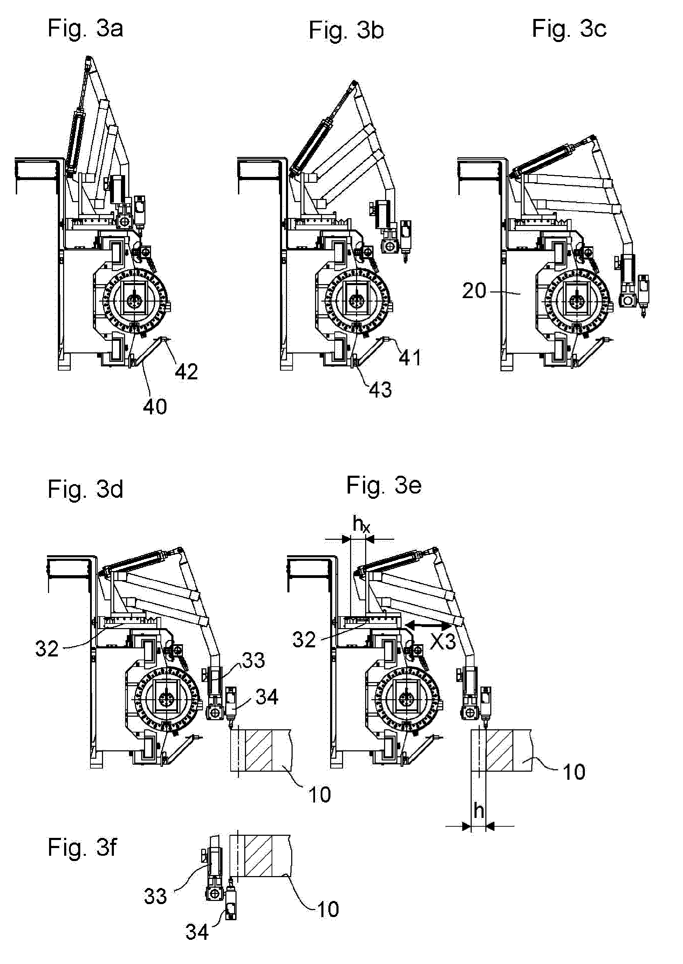

**Fig. 3a** bis **3c** zeigen die Schwenkbewegung der Anfas- und Entgratvorrichtung 30 von ihrer Parkposition Fig. 3a zu ihrer Arbeitsposition Fig. 3c. Über diese Schwenkbewegung wird die Anfasspindel 34 mit dem Werkzeug 35 und dem Werkstück 10 in Eingriff gebracht. Unten am Bearbeitungskopf 20 wird die Messeinrichtung 43 dargestellt, mit einem Messkopf 42 und einem Messtaster 41 mit dem die Zahnform abtastet und so die Kontur der Zahnkante zur Vorbereitung der Anfasbearbeitung bestimmt werden kann.

In der **Fig. 3d** bis **3f** wird schematisch die Anfas- und Entgratvorrichtung bei der Bearbeitung einer Zahnkontur gezeigt. Über den Zustellschlitten 32 erfolgen in diesem Fall die Radial-Zustellung des Werkzeugs zum Werkstück sowie die Bewegung in Richtung der Zahnhöhe. Die maximal bearbeitbare Zahnhöhe (h) hängt direkt von der maximalen Zustellung in X3-Richtung (hx) ab. Fig. 3e zeigt dabei die maximal mögliche Zustellung über die X3-Achse. Sind größere Zahnhöhen erforderlich muss in diesem Fall alternativ oder zusätzlich noch eine Bewegung über die X1- Achse erfolgen.

Die **Fig. 3f** zeigt die Anfasspindel 34 bei der Bearbeitung der unteren Stirnseite einer Verzahnung am Werkstück 10. Die Anfasspindel 34 wurde bei dieser Ansicht um 180° mit dem Schwenkmotor 33 nach oben geschwenkt.

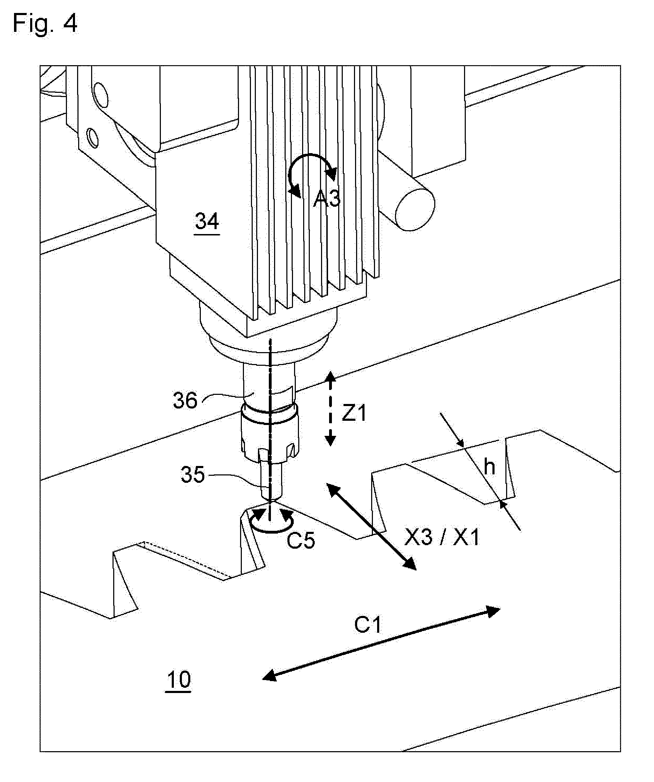

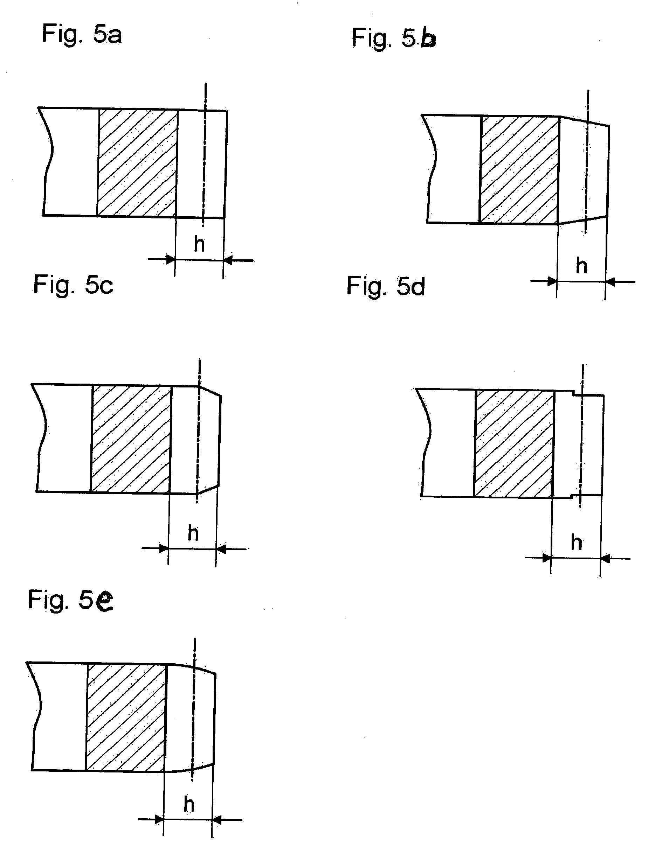

Die **Fig.** 4 ist eine Detailansicht, bei der die Anfasspindel 34 mit dem Anfasfräser 35 an der Bearbeitungsstelle gezeigt wird. Der Fräser folgt der Zahnkantenkontur, indem er über die X3/X1-Achse radial in Richtung der Zahnhöhe bewegt wird, während sich das Werkstück um seine C1 Achse dreht. Durch die Kombination aus X- und C-Bewegung folgt der Fräser in der 2D Fläche der Verzahnung. Damit sind stirnebene Verzahnungen, wie sie in der **Fig. 5a** gezeigt werden, anfasbar. Sind jedoch die Stirnseiten im Bereich der Verzahnung so ausgebildet wie dies in den Skizzen in der **Fig. 5b** bis **5d** gezeichnet ist, muss zusätzlich noch eine gesteuerte vertikale Bewegung in Z1-Richtung (gestrichelt dargestellt) abhängig von der Zahnhöhe h erfolgen. Bei Schrägverzahnungen kann außerdem noch eine Bewegung um die A3-Achse erfolgen, um die Fasengröße zwischen rechter und linker Flanke anzugleichen.

## Patentansprüche

1. Verfahren zum Anfasen und Entgraten verzahnter Werkstücke, insbesondere von großvolumigen Werkstücken, mit einer Anfas- und Entgratvorrichtung, welche auf oder an dem Bearbeitungskopf einer Verzahnmaschine angeordnet ist,
**dadurch gekennzeichnet,**
**dass** die Anfasspindel mit dem Anfasfräser zur Anfasbearbeitung von einer Ruheposition außerhalb der Störkontur der Verzahnungsbearbeitung in eine Arbeitsposition im Arbeitsbereich des Verzahnwerkzeugs durch die Anfas- und Entgratvorrichtung geschwenkt und/oder zugestellt wird, wobei die Anfasspindel mit dem Anfasfräser näher am Werkstück als der Verzahnungsfräser positioniert wird, sodass das Verzahnwerkzeug bei der Anfasbearbeitung im Bearbeitungskopf verbleiben kann und wobei die Bewegungen der Anfasspindel mit dem Anfasfräser zur Konturverfolgung entlang der Zahnkante durch die Bewegungsachsen der Verzahnmaschine, vorzugsweise die des Bearbeitungskopfs, erfolgen.

2. Verfahren nach Anspruch 1, **dadurch gekennzeichnet, dass** die Bewegungen zur Konturverfolgung des Anfasfräsers teilweise durch die Bewegungsachsen der Verzahnmaschine, vorzugsweise die des Bearbeitungskopfs, erfolgen und dass ein weiterer Teil der Bewegungen zur Konturverfolgung mit Bewegungsachsen innerhalb der Anfas- und Entgratvorrichtung erfolgen.

3. Verfahren nach Anspruch 1 oder 2, **dadurch gekennzeichnet, dass** die Lage und Form einer Zahnlücke, sowie bedarfsweise die obere und untere Stirnseite im Bereich der Verzahnung, zur Bestimmung des Zahnkantenverlaufs für die Anfasung mit einer in der Verzahnmaschine integrierten Messeinrichtung bestimmt wird.

4. Verfahren nach Anspruch 1, **dadurch gekennzeichnet, dass** nur Teile des Zahnprofils wie z.B. der Zahnfuss und der Zahnkopf sowie bedarfsweise die obere und untere Stirnseite im Bereich der Verzahnung mit einer in der Verzahnmaschine integrierten Messeinrichtung bestimmt und die zur Beschreibung des Zahnkantenverlauf restlichen Werte aus den Verzahndaten übernommen werden.

5. Verfahren nach einem der vorhergehenden Ansprüche, **dadurch gekennzeichnet, dass** nur ein Zahn oder eine Zahnlücke bzw. Teile davon, sowie bedarfsweise die obere und untere Stirnseite im Bereich der Verzahnung dieses Zahns oder dieser Zahnlücke, vermessen werden, wobei diese Daten zur Bearbeitung der weiteren Zahnlücken herangezogen werden.

6. Verfahren nach einem der vorhergehenden Ansprüche, **dadurch gekennzeichnet, dass** der Schwenkwinkel der Anfasspindel in Abhängigkeit von der Fräserposition relativ zur Zahnhöhe und der Flankenseite, insbesondere bei Schrägverzahnungen, gesteuert wird.

7. Anfas- und Entgratvorrichtung zur Anwendung des Verfahrens nach einem der der vorhergehenden Ansprüche.

8. Anfas- und Entgratvorrichtung nach Anspruch 7, **dadurch gekennzeichnet, dass** in der Verzahnmaschine, vorzugsweise am Bearbeitungskopf, eine Messeinrichtung montiert ist, geeignet zur Vermessung einer oder mehrerer Zahnlücken sowie zur Vermessung der Stirnseite des Werkstücks in Bereich der Verzahnung.

9. Anfas- und Entgratvorrichtung nach Anspruch 7 und 8, **dadurch gekennzeichnet, dass** die Anfasspindel zur Bearbeitung der oberen bzw. unteren Stirnseite der Verzahnung und zur Anpassung des Fasenwinkels schwenkbar ist.

10. Anfas- und Entgratvorrichtung nach einem der vorhergehenden Ansprüche, **dadurch gekennzeichnet, dass** die Anfas- und Entgratvorrichtung für weitere Bearbeitungsaufgaben wie z.B. Bohr- und/oder Schleifoperationen am Werkstück eingesetzt werden kann und dass der Wechsel zwischen den Operationen bedarfsweise durch einen automatischen Wechsel des Werkzeugs und/oder der Bearbeitungsspindel erfolgt.
